# EUROPEAN PATENT APPLICATION

(11) **EP 3 082 074 A1**
(43) Date of publication of application: **19.10.2016**
(21) Application number: 14870193.1
(22) Date of filing: 20.10.2014
(51) Int. Cl.: G06Q 10/00, G06Q 50/06, H02J 3/00, H02J 13/00

(54) **DEMAND PREDICTION DEVICE, ENERGY CONSERVATION ASSISTING SYSTEM**

(30) Priority: 13.12.2013 JP 2013257671
(71) Applicant: Panasonic Intellectual Property Management Co., Ltd., Osaka-shi, Osaka 540-6207 (JP)
(72) Inventor: NISHIYAMA, Takashi, Osaka-shi, Osaka 540-6207 (JP); SHIMIZU, Noriyoshi, Osaka-shi, Osaka 540-6207 (JP); NAKAHARA, Tomoharu, Osaka-shi, Osaka 540-6207 (JP); IKEMURA, Sho, Osaka-shi, Osaka 540-6207 (JP)
(74) Representative: Appelt, Christian W.
(86) International application number: PCT/JP2014/005301
(87) International publication number: WO 2015/087473

(57) **Abstract**

An object is to predict, in units of branch circuits, information on power to be consumed in a consumer's building without burdening a user in the consumer's building. A receiver (11) acquires power values respectively consumed through two or more branch circuits (22). A first memory (12) stores power information in association with relevant information that relates to the power information. The power information includes date and time, and a power value corresponding to each branch circuit (22). A feature extractor (13) extracts a feature value in the power information of each branch circuit (22). A rule extractor (14) sets the relevant information to an explanatory condition for a change in the feature value, and extracts a rule for deriving the feature value from the explanatory condition. A predictor (16), when a target value is set to the building (20) for power saving in an object period, acquires the relevant information in the object period, and applies the rule to the relevant information acquired so as to predict the feature value corresponding to each branch circuit (22) in the object period.

## Description

### TECHNICAL FIELD

The invention relates generally to demand prediction systems and energy conservation assisting systems and, more particularly, to a demand prediction system that predicts a power consumption state due to a consumer, and an energy conservation assisting system that assists energy conservation in the consumer's facility, using the power consumption state predicted by the demand prediction system.

### BACKGROUND ART

There has been conventionally proposed a technique of: predicting a demand for electric power; and determining whether or not a client is needed to be subjected to the load reduction control based on a predicted load demand for electric power (e.g., see JP 2002-176729 A). According to the technique described in this document, information on electric power allowed to be reduced is cyclically transmitted from the client to an electric power provider, and accordingly, the electric power provider can always grasp the power allowed to be reduced. In other words, the electric power provider receives a response as "a load reduction possible power table" from the client in order to acquire, from the client, a list relating to power, which the client allows to be reduced.

However, a power consumer does not generally grasp power consumed by an electric load(s), and it is therefore difficult for a user in the power consumer's building to input data for the load reduction possible power table.

### DISCLOSURE OF THE INVENTION

It is an object of the present invention to provide a demand prediction system, which can predict, in units of branch circuits, information on power to be consumed in a consumer's building without burdening a user in the consumer's building, and to further provide an energy conservation assisting system for this demand prediction system.

A demand prediction system according to an aspect of the present invention includes a receiver, a first memory, a feature extractor, a rule extractor, a second memory and a predictor. The receiver is configured to acquire, from a meter, power values respectively consumed through two or more branch circuits branched in a distribution board installed in a building of a power consumer. The first memory is configured to store power information in association with relevant information that relates to the power information. The power information includes date and time, and a power value corresponding to each branch circuit acquired by the receiver. The feature extractor is configured to extract a feature value in the power information of each branch circuit stored in the first memory. The rule extractor is configured to set the relevant information stored in the first memory to an explanatory condition for a change in the feature value, and extract a rule for deriving the feature value from the explanatory condition. The second memory is configured to store the rule extracted by the rule extractor. The predictor is configured to, when a target value is set to the building for power saving in an object period, acquire the relevant information in the object period, and apply the rule stored in the second memory to the relevant information acquired so as to predict the feature value corresponding to each branch circuit in the object period.

An energy conservation assisting system according to an aspect of the present invention includes: the demand prediction system described above; and the presenting device that presents the power-saving measure received from the demand prediction system.

According to the aspects of the present invention, a rule for predicting a feature value of a power value per branch circuit from the relevant information is extracted, with respect to each building, based on feature values of power values respectively consumed through two or more branch circuits branched in a distribution board installed in a building of each power consumer. Furthermore, the feature value of the power value, relating to the corresponding power consumer, in the object period (during which the power saving is implemented) is predicted using this rule. Accordingly, it is possible to predict, in units of branch circuits, information on power to be consumed in the building of the power consumer without burdening a user in the building.

### BRIEF DESCRIPTION OF THE DRAWINGS

Preferred embodiments of the invention will now be described in further details. Other features and advantages of the invention will become better understood with regard to the following detailed description and accompanying drawings where:
FIG. 1 is a block diagram illustrating a configuration according to Embodiment 1;
FIG. 2 is an explanatory diagram for an operation according to Embodiment 1;
FIG. 3 is a block diagram illustrating another configuration according to Embodiment 1; and
FIG. 4 is a block diagram illustrating a configuration according to Embodiment 2.

### DESCRIPTION OF EMBODIMENTS

### (Embodiment 1)

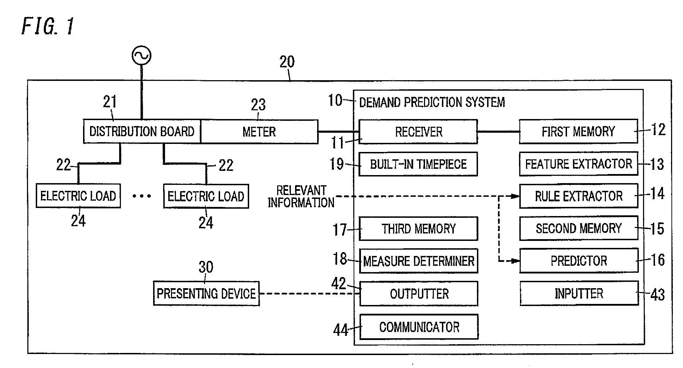

As shown in FIG. 1, a demand prediction system 10 described below includes a receiver 11, a first memory 12, a feature extractor 13, a rule extractor 14, a second memory 15 and a predictor 16. The receiver 11 is configured to acquire, from a meter 23, power values respectively consumed through two or more branch circuits 22 branched in a distribution board 21 installed in a building 20 of a power consumer. The first memory 12 is configured to store power information in association with relevant information that relates to the power information. The power information includes date and time, and a power value corresponding to each branch circuit 22 acquired by the receiver 11. The feature extractor 13 is configured to extract a feature value in the power information of each branch circuit 22 stored in the first memory 12. The rule extractor 14 is configured to set the relevant information stored in the first memory 12 to an explanatory condition for a change in the feature value, and extract a rule for deriving the feature value from the explanatory condition. The second memory 15 is configured to store the rule extracted by the rule extractor 14. When a target value is set to the building 20 for power saving in an object period, the predictor 16 is configured to predict the feature value corresponding to each branch circuit 22 in the object period. The predictor 16 is configured to acquire the relevant information in the object period and apply the rule stored in the second memory 15 to the relevant information acquired so as to predict the feature value corresponding to each branch circuit 22.

The demand prediction system 10 preferably further includes a third memory 17, a measure determiner 18 and an outputter 42. The third memory 17 is configured to store names for specifying the two or more branch circuits 22 in association with the two or more branch circuits 22, respectively. The measure determiner 18 is configured to determine a power-saving measure, and a branch circuit 22 to be subjected to the power-saving measure to achieve the target value, of the two or more branch circuits 22, based on as a condition the feature value in the object period predicted by the predictor 16 and the relevant information. The outputter 42 is configured to refer to the third memory 17 to extract, from the names, a name of the branch circuit 22 that has been determined to be subjected to the power-saving measure by the measure determiner 18, and allow a presenting device 30 to present the power-saving measure together with the name.

The feature extractor 13 is preferably configured to calculate dispersion of periods during which power is consumed through each branch circuit 22 based on the power information. When a certain branch circuit 22 exists, where the dispersion is equal to or more than a reference value, in the two or more branch circuits 22, the measure determiner 18 is preferably configured to: allow the presenting device 30 to present, as the best power-saving measure, a peak shift; and allow the presenting device 30 to present, as the second best power-saving measure, a peak cut. The peak shift means a measure for not using an electric load 24 connected to the certain branch circuit 22 during the object period. The peak cut means a measure for reducing power to be consumed during the object period through a branch circuit 22, where power predicted as the feature value by the predictor 16 is relatively large, of the two or more branch circuits 22.

When allowing the presenting device to present the peak shift as the power-saving measure, the measure determiner 18 is preferably configured to select a time slot during which a targeted electric load 24 of two or more electric loads 24 is available from time slots during which the targeted electric load 24 has been used in past, and allow the presenting device to present the time slot. The time slot is selected from the time slots during which the targeted electric load 24 has been used in past, based on the power information stored in the first memory 12.

The relevant information preferably includes at least one of calendar information, weather information, user information and building information. The calendar information includes seasons and days of week. The weather information includes weather and outside air temperature. The user information includes an attribute of a user using power in the building 20. The building information includes an attribute of the building 20.

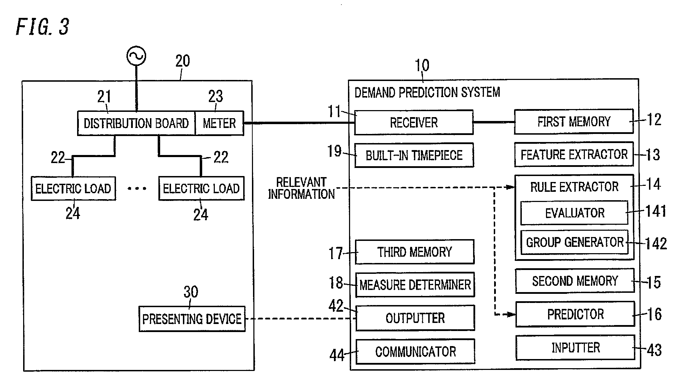

The receiver 11 is preferably configured to acquire plural sets of power values measured by plural meters 23 in plural buildings 20 of consumers, respectively, in addition to a set of the power values measured by the meter 23 in the building 20. In this case, the rule extractor 14 as shown in FIG. 3 preferably includes an evaluator 141 and a group generator 142. The evaluator 141 is configured to calculate an evaluation value that denotes a degree of similarity between rules respectively extracted with respect to all buildings 20 of the building 20 and the plural buildings 20. The group generator 142 is configured to combine, as a single rule, two or more rules extracted with respect to two or more buildings 20 of the all buildings 20, of the rules, when the two or more rules are similar to an extent such that the evaluation value of the two or more rules is in a prescribed range. The second memory 15 is preferably configured to store the single rule in association with the two or more buildings 20 such that the single rule combined by the group generator 142 is applied to the two or more buildings 20.

Hereinafter, an energy conservation assisting system will be described in more detail, where includes: the above mentioned demand prediction system 10; and the presenting device 30 that presents the power-saving measure received from the demand prediction system 10. In the explanation described below, it is assumed that each consumer's building 20 is a dwelling house and a distribution board 21 is installed in each dwelling house. In a case of a condominium having a plurality of dwelling units, an individual dwelling unit may be deemed to be one building 20 according to this embodiment, or the whole of the condominium may be deemed to be one building 20 when the condominium is adapted for collectively receiving electric power at high voltage. Buildings 20 in this embodiment mean buildings occupied by clients from which an electric utility collects electricity charges.

The demand prediction system 10 described below includes, as a main hardware element, a computer that executes a program for realizing functions described later. This program may be previously stored in a ROM (Read Only Memory), or provided via a telecommunication network such as the Internet, or provided with a computer-readable storage medium.

As shown in FIG. 1, a building 20 includes a distribution board 21 that receives power from a commercial power supply of an electric utility. The distribution board 21 branches the received power into two or more branch circuits 22 that constitute two or more systems in order to distribute the power into two or more electric loads 24 in the building 20. A meter 23 measures power consumed per branch circuit 22. This meter 23 may be disposed in the distribution board 21, or around the distribution board 21.

The meter 23 monitors, with a Rogowski coil or a clamp type current sensor, a current flowing through each branch circuit 22, and calculates, as a power value, an integrated value obtained by integrating the product of the monitored current value and a line voltage value of each branch circuit 22. In other words, actually, the power value measured by the meter 23 is not instantaneous power but electric energy per prescribed unit time (e.g., selected in a range of about 30 seconds to 10 minutes). Generally the instantaneous power per branch circuit 22 is changed with the lapse of time even within unit time, but, in this embodiment, the integrated electric energy per unit time is used as the power value without considering the change of the instantaneous power within unit time. This power value is regarded to be equivalent to an average power value in unit time.

The power value measured by the meter 23 is combined with relevant information, and made as information to be input to the demand prediction system 10. The demand prediction system 10 includes a receiver 11 that acquires the power value. The power value received from the meter 23 via the receiver 11 is associated with date and time, and then stored as power information in a first memory 12. The date and time is clocked by a built-in timepiece 19, such as a real-time clock, built in the demand prediction system 10. The power information includes: the power value per unit time; and the date and time when the power value is acquired.

The relevant information means information that is assumed to have relevance to power to be consumed by an electric load 24 that is used in a building 20, and includes at least one of calendar information, weather information, user information and building information.

The calendar information includes seasons (e.g., the four seasons or the twenty-four seasons) and days of week (weekdays and holidays). The seasons have relevance to tendency of air temperature and sunshine hours, and the days of week have relevance to a type of life activity of a dweller and a timing of the life activity (a time). The seasons and the days of week are therefore assumed to have relevance to power to be consumed by electric loads 24 that are used for air-conditioning, lighting and cooking, etc. The weather information includes weather (such as the fine, the cloudy or the rainy weather) and outside air temperature. The weather and the outside air temperature are also easily assumed to have relevance to power to be consumed by electric loads 24 that are used for air-conditioning, lighting and cooking, etc.

The user information includes an attribute of a user that uses an electric load(s) 24 in a building 20, and includes a family structure (the number, sex and age, etc.), an income, and the family member's values (such as a strong intention to the energy conservation or the comfort) in the building 20. The attribute of a user is expected to have influence on a power consumption pattern over the whole of the building 20. The building information includes a geographical location of the dwelling house (such as the region and the topography), a type of building (a detached house or a condominium), and types and the number of rooms (e.g., two Living rooms, one Dining room and one Kitchen room, or three Living rooms, one Dining room and one Kitchen room). Such the building information is expected to have relevance to power to be consumed by electric loads 24 that are used for air-conditioning and lighting, etc.

For the relevant information, the above four kinds of information are preferably used, but one or more of the four kinds may be used in consideration of a simple configuration. The user information and the building information, of the relevant information, cannot be acquired as external data, and are therefore needed to be given to the demand prediction system 10 separately. On the other hand, the calendar information and the weather information can be acquired as external data via a telecommunication network such as the Internet. Accordingly, the demand prediction system 10 includes: an inputter 43 for receiving the user information and the building information; and a communicator 44 that is an interface with the telecommunication network. The user information and the building information may be input into the inputter 43, using an input device that can interactively urge a user to input data.

The demand prediction system 10 can be installed in a building 20, or in a server. Alternatively, a part of constituent elements of the demand prediction system 10 may be installed in the building 20 and the remaining parts may be installed in the server. In this case, the server may have therein the receiver 11, the first memory 12, the feature extractor 13, the rule extractor 14 and the second memory 15, and the building 20 may have therein the predictor 16, the third memory 17 and the measure determiner 18.

With the configuration that the demand prediction system 10 is installed in the building 20, the outputter 42 and the inputter 43 may be formed so as to be connected with a dedicated operation display that serves both of functions of the presenting device 30 and the input device. Alternatively, a terminal apparatus capable of communicating with the demand prediction system 10 may serve both of the functions of the presenting device 30 and the input device. In this configuration, the outputter 42 and the inputter 43 communicates with the terminal apparatus via the communicator 44.

With the configuration that the demand prediction system 10 is installed in the server, a terminal apparatus capable of communicating with the server via a telecommunication network such as the Internet or a mobile object telephone network may serve both of the functions of the presenting device 30 and the input device. In this configuration, the outputter 42 and the inputter 43 communicates with the terminal apparatus via the communicator 44. The terminal apparatus may be a personal computer, a smartphone or a tablet terminal device, etc.

In case the constituent elements of the demand prediction system 10 are installed to be divided into the building 20 and the server, the outputter 42 and the inputter 43 may be formed to have the same configuration as the case where the demand prediction system 10 is installed in the building 20. According to this configuration, a constituent element(s) with a large processing load can be installed in the server with high processing performance, and a constituent element(s) needing an individual processing per building 20 can be installed on the building 20 side. Processing loads can be therefore distributed appropriately. In short, it is possible to shorten throughput and suppress an increase of communication traffic.

Next, the operation of the demand prediction system 10 will be described. As above, the receiver 11 acquires the power values respectively corresponding to the two or more branch circuits 22, measured by the meter 23, and the first memory 12 stores the power values acquired by the receiver 11, while the power values are associated with the date and time clocked by the built-in timepiece 19. The power values are accumulated during a prescribed accumulation period in the first memory 12, and then the feature extractor 13 extracts feature values of the power values. The accumulation period is preferably a period for several years in order to enhance the accuracy of the extracted feature values and the certainty of the extracted rules. When the feature extractor 13 however extracts the feature values after the accumulation period that is set long, it may lead to a delay at the start of the operation. Accordingly, the feature extractor 13 is preferably configured to extract the feature values after the accumulation period that is set relatively short (e.g., about 1 month), only at the beginning, and then do it after the accumulation period set appropriately longer, thereby gradually enhancing the accuracy.

The feature extractor 13 calculates, as the feature value, the power consumption by the day per branch circuit 22 and the maximum value of the power value by the day per branch circuit 22. The feature extractor 13 further extracts a time period, per branch circuit 22, during which an electric load 24 connected to a branch circuit 22 has been used continuously. In other words, the feature extractor 13 estimates a value of standby power per branch circuit 22 based on a change in the power value during the accumulation period stored in the first memory 12, and then determines the presence or absence of a time period during which the power value has been continuously increased with respect to the standby power.

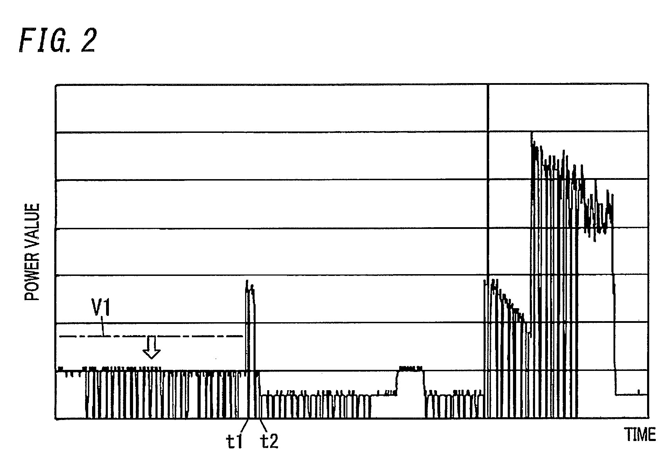

To estimate the standby power, as shown in FIG. 2, a comparison value V1 to be compared with the power value is variable; the minimum value of the comparison value is calculated in a range of meeting a condition that a time period, during which the power value is equal to or less than the comparison value, exceeds a predetermined sustaining period; and the minimum value is defined as the maximum value of the standby power. The sustaining period is set to a time period slightly shorter than a time period during which an electric load 24 is estimated as not to be used. The illustrated example shows an operation of gradually reducing the comparison value V1 to search for the power standby.

The feature extractor 13 estimates the respective standby power corresponding to the two or more branch circuits 22, and when there is a time period during which the power value of a branch circuit 22 is continuously equal to or more than the standby power, determines that an electric load 24 connected to the branch circuit 22 has been used (has been in operation). In case one electric load 24 is connected to one branch circuit 22, the feature extractor 13 can determine that the time period during which the power value has been continuously increased is the time period during which the electric load 24 has been used continuously. In case electric loads 24 are connected to one branch circuit 22, the feature extractor 13 defines, as a unit, a place (generally a room) corresponding to the branch circuit 22, and determines that any of the electric loads 24 has been continuously used at the place during a time period (t1 to t2).

As above, since the feature extractor 13 can determine the time period during which the electric load(s) 24 has been used, it can also obtain a start time and an end time of the operation of the electric load 24. The feature value to be extracted by the feature extractor 13 for example includes: the maximum value of the power value of each branch circuit 22, in the used time period of an electric load 24 connected to the each branch circuit 22; and the electric energy consumed by the electric load 24 during the used time period. The feature value to be extracted by the feature extractor 13 may further include a start time t1 and an end time t2 of the use of the electric load 24.

In case the feature extractor 13 extracts, for each branch circuit 22, the start time and the end time about the use of the electric load 24, as the feature value, it is preferably configured to calculate the dispersion of periods during which power has been consumed through each branch circuit 22.

The feature extractor 13 may handle, as the feature value, the power value together with a setting state of an output of an electric load(s) 24, if the output can be adjusted. For example in case an electric load 24 is an air-conditioner, the setting state such as a setting temperature or an air blow rate may be used as the feature value.

The feature value extracted by the feature extractor 13 is combined with the relevant information at a time when the feature value is acquired, and then input to the rule extractor 14. The rule extractor 14 evaluates relevance between the feature value and the relevant information. In other words, the relevant information is set to an explanatory condition for a change in the feature value, and the rule for deriving the feature value is extracted. For example, the rule extractor 14 evaluates a correlation coefficient between the feature value and individual relevant information, and when an absolute value of the correlation coefficient exceeds a prescribed threshold value, determines that the feature value can be derived based on the corresponding relevant information as the explanatory condition. The rule is denoted by a form such as: a numerical expression where the relevant information is set to an explanatory variable; or a data table where the relevant information is associated with the feature value. Alternatively, the rule may be denoted as a production rule where the feature value for the corresponding branch circuit 22 can be obtained when the relevant information is met.

The relevant information to be used for deriving the feature value sometimes includes a single condition, however, often includes two or more conditions. In addition, the rule may be set for each building 20. In other words, the number of combinations for extracting the rule that associates the feature value with the relevant information may become very large. Accordingly, the rule extractor 14 is preferably installed in the server with high processing performance.

A simple example to derive the rule will be described. Now the power value over the past one year is assumed to be stored in the first memory 12. The relevant information is assumed to include the seasons (spring, summer, fall and winter), weekdays and holidays, and weather (the fine and the rainy weather). The feature value is assumed to be: the power consumption by the day per branch circuit 22; and the maximum value of the power value by the day per branch circuit 22. In this case, the relationship between the relevant information and the feature value can be represented by a tabular form as Table 1 below.

**[Table 1]**

| Branch Circuit | Feature Value | Summer | | | |
|---|---|---|---|---|---|
| | | Weekday | | Holiday | |
| | | Fine | Rainy | Fine | Rainy |
| Air-conditioner in Living Room | Power Consumption per Day | X [Wh] | | | |
| | Maximum Value of Power Value | Y [W] | | | |
| | Number of Operations per Day | 2 times | | | |
| | Operation Time per Day | 10 hour | | | |
| | Average of Start Times | 8:00 | | | |
| | Dispersion of Start Times | 10 min | | | |
| | Average of End Times | 13:00 | | | |
| | Dispersion of End Times | 15 min | | | |
| Living Room (Power Outlet) | | | | | |
| Air-conditioner in Japanese-style Room | | | | | |
| Air-conditioner in Western-style Room | | | | | |
| Washing Machine | | | | | |
| ... | | | | | |

In the illustrated example when one branch circuit 22 corresponds to one electric load 24, a name of the electric load 24 is described in the table, and when one branch circuit 22 corresponds to a place, a name of the place is described in the table. Also, Table 1 includes: the number of operations, the electric load 24 has been operated during one day; the operation time during which the electric load has been used once; the average and the dispersion of the start times; and the average and the dispersion of the end times. By arranging the relevant information and the feature value into such a tabular form, it is possible to obtain a correlation between the relevant information and the feature value. Furthermore by obtaining a relation with a strong correlation, it is possible to extract the rule for deriving the feature value, using the relevant information as the condition.

The relevant information and the feature value shown in Table 1 is merely one example. The variable of the weather as the relevant information may be increased (e.g., addition of the cloudy weather or the snowfall, etc.), and also the number of kinds of the relevant information may be increased (e.g., addition of the air temperature or the humidity, etc.).

Although not shown, a generation frequency of the feature value per day under an individual condition of the relevant information may be represented by a histogram. In this case, the rule extractor 14 may divide the feature value by two or more zones (e.g., divide the maximum value of the power value by three zones), and calculate generation frequencies respectively corresponding to the two or more zones so as to generate the histogram.

The rule extracted by the rule extractor 14 is stored in the second memory 15 as a database (a knowledge base). In case the rule is previously registered in the second memory 15, it is possible to obtain the feature value by applying the corresponding rule when the relevant information is given. Therefore, in case a target value is set to a building 20 for power saving in a prescribed object period, it is possible to obtain the feature value in the object period by acquiring the relevant information in the object period. The target value may be set for power saving by the building 20 side, or given as Demand Response information (DR information) for demanding power saving by an electric utility.

When the target value is set for power saving in the object period, the predictor 16 first acquires the relevant information in the object period. The processing of acquiring the relevant information includes acquiring information from another server via a telecommunication network. For example when the relevant information is the weather, the weather information in the object period may be acquired from a server that has information on a weather forecast. When acquiring the relevant information in the object period, the predictor 16 applies the rule stored in the second memory 15 to the relevant information acquired so as to predict the feature value regarding the power value.

For example when it is assumed that the object period during which the power saving is applied is a certain day, the predictor 16 acquires the relevant information: the season; a weekday or a holiday; and the weather, regarding the certain day. The predictor 16 further extracts the rule, which can be applied to the acquired relevant information, from the second memory 15, and calculates the maximum value of the power value as the feature value, using the extracted rule.

When the target value is given as the demand of power saving by the electric utility, the maximum value of the power value in a prescribed time slot over the whole of a building 20 (dwelling house) is the target value. Accordingly, in this case, a total value of power values about all branch circuits 22 in the building 20 (dwelling house) is calculated. Whether or not the total value exceeds the target value in the object period becomes a standard for determining whether or not to perform the power saving. In this way when predicting whether or not the power value to be consumed during the object period in the building 20 exceeds the target value, the demand prediction system 10 outputs the predicted result through the outputter 42 to allow the appropriate presenting device 30 to present it. A user itself can decide whether or not to perform the power saving based on the result about whether or not the target value can be achieved in the object period, provided via the presenting device 30 by the demand prediction system.

The presenting device 30 may include a flat panel display such as a liquid crystal display and a touch panel, or may be a dedicated display device in combination with a push button switch. Alternatively, depending on the configuration of the outputter 42, the presenting device 30 may be a terminal device such as a personal computer, a smartphone or a tablet terminal device.

The demand prediction system 10 is preferably configured to present a power-saving measure to achieve the target value, when the target value cannot be achieved. For this reason, the demand prediction system 10 includes a measure determiner 18. The measure determiner 18 determines whether or not the power value set for the object period can reach the target value, based on a comparison of the feature value predicted by the predictor 16 with the target value, and then sets the power-saving measure, when the target value cannot be achieved.

In the case of the demand of power saving, since the target value is set with respect to the maximum value of the power value, it can be said that the target value is achieved when the maximum value of the power value is equal to or less than the target value. In case the user sets the target value, since the target value of the power value is set with respect to the power consumption, it can be said that the target value is achieved when the power consumption in the object period is equal to or less than the target value. Hereinafter, a case will be described, where the target value is set for the demand of power saving.

In this embodiment, the measure determiner 18 uses as the power-saving measure, two kinds: a peak shift and a peak cut. The peak shift means a measure to promote a user to shift, from the object period, a time slot during which the user is predicted to operate a specific electric load 24 connected to a branch circuit 22, namely, not to use the specific electric load 24 during the object period. The peak cut means a measure to promote the user to reduce power to be consumed during the object period through a branch circuit 22, where power predicted as the feature value by the predictor 16 is relatively large. Note that the measure determiner 18 may use either the peak shift or the peak cut, as the power-saving measure.

The measure determiner 18 may set, as one choice for the power-saving measure, a measure to promote the user to adjust an output of an electric load 24, if the output can be adjusted. For example when the electric load 24 is an air-conditioner, the adjustment of the output corresponds to adjustment of a setting temperature or an air blow rate, etc. Since the power-saving measure can be set for each branch circuit 22, the respective different power-saving measures are defined to the two or more branch circuits 22. The power-saving measure for each branch circuit 22 can be preferably selected from two or more power-saving measures such that an appropriate measure is used in accordance with the relevant information or the feature value.

The measure determiner 18 therefore memorizes plural kinds of choices relating to the power-saving measure so as to be able to select the power-saving measure in accordance with a condition when the predictor 16 predicts the feature value in the object period. In other words, the measure determiner 18 has a database (a knowledge base) that stores a rule of selecting the power-saving measure. The choices relating to the power-saving measure are previously defined, and the rule for selecting an appropriate kind of choice with respect to a certain condition is registered in the measure determiner 18 in accordance with each building 20.

However, the feature extractor 13 extracts the dispersions of the start times and the end times regarding the use (operation) of an electric load 24, and when the dispersions is equal to or more than a reference value, the measure determiner 18 preferably adopts the peak shift prior to the peak cut. In other words, when at least one of the dispersion of the start times or the dispersion of the end times is large, it means that the variance in the time slot, during which the corresponding electric load 24 is used, is large. Accordingly, it is expected that the user will easily accept shifting of the time slot during which he/she uses the corresponding electric load 24.

As described above, when the feature extractor 13 calculates the dispersion of periods during which an electric load(s) 24 has been used in unit of each branch circuit 22, the measure determiner 18 evaluates whether or not the dispersion is equal to or more than a reference value. When a certain branch circuit 22 exists, where the dispersion is equal to or more than the reference value, in two or more branch circuits 22, the measure determiner 18 adopts the peak shift as the best power-saving measure, and the peak cut as the second best power-saving measure. The power-saving measures adopted by the measure determiner 18 are output via the outputter 42, and then presented by the presenting device 30.

When allowing the presenting device 30 to present the power-saving measure, the demand prediction system preferably also allows the presenting device 30 to preset a name of an electric load 24 occupying a branch circuit 22 to be subjected to the power-saving measure, or a name of a place (e.g., a room) corresponding to the branch circuit 22 to be subjected to the power-saving measure. In other words, it is possible for the user to easily know the electric load 24 or the place, which should be subjected to the power-saving measure, by the demand prediction system also allowing the presenting device 30 to present the name of the electric load 24 or the place.

Names to be presented by the presenting device 30 are set in the third memory 17. That is, the third memory 17 stores names for specifying the two or more branch circuits 22 in association with the two or more branch circuits 22, respectively. Information in the third memory 17 is previously written by a user or a constructor of installing the demand prediction system 10 so as to correspond to each building 20 before the operation of the demand prediction system is started. The information into the third memory 17 may be written with an operation apparatus (such as a touch panel or a keyboard) provided at the presenting device 30 described above.

For example it is assumed that the two or more electric loads 24 or places (rooms) respectively correspond to the two or more branch circuits 22 in one-to-one. In this case, each branch circuit 22 can be specified by a name, such as "Air-conditioner in Living Room", "Air-conditioner in Japanese-style Room", "Air-conditioner in Western-style Room", "Living Room (Power Outlet)", "Kitchen and Washroom", "Washing Machine", "Refrigerator", or "Western-style Room (Power Outlet)".

The measure determiner 18 determines a branch circuit(s) 22 to be subjected to the power-saving measure, then extracts a name corresponding to the branch circuit 22 from the third memory 17, and then allows the presenting device 30 to present the power-saving measure together with the name of the branch circuit to be subjected to the power-saving measure.

In the case of presenting the peak shift as the power-saving measure, the measure determiner 18 may allow the presenting device 30 to present a time slot during which a targeted electric load 24 is available. This time slot may be selected from time slots during which the targeted electric load 24 has been used in past. In other words, when the first memory 12 stores the actual result that the targeted electric load 24 has been used in a time slot which is out of a time slot corresponding to the object period, the demand prediction system recommends the same time slot used in past as a time slot during which the targeted electric load 24 is available. In the case where there are plural time slots during which the targeted electric load 24 has been used in past, a time slot with a higher use frequency may be preferentially selected.

The time slot in the case where the peak shift is selected as the power-saving measure may be selected, using a unit price of the electricity rate as a selection reference other than the actual result in past. That is, when a time slot in which the unit price of the electricity rate is low can be selected as a time slot of applying the peak shift, it is possible to provide, to a user, a motivation for implementing the power-saving measure using the peak shift, by presenting to the user the corresponding time slot.

Table 2 shows as one example the power-saving measures corresponding to the branch circuits 22, registered in the measure determiner 18. Table 2 also shows content examples to be presented by the presenting device 30, which correspond to the power-saving measures. For example, the power-saving measure for a branch circuit 22 with a name of "Washing Machine" includes "Reduce Use Time (Cancel Drying Operation)" and "Shift Start Time", and the presenting content includes "Recommended Available Time Slot".

**[Table 2]**

| Electric Load | Power-saving Measure | Presenting Content |
|---|---|---|
| Air-conditioner in Living Room | • Turn off | • Suggest Reducing of the Number of Air-conditioners to be used |
| | • Reduce Use Time | |
| | • Shift Start Time | • Suggest Changing of Setting Content |
| Air-conditioner in Japanese-style Room | • Turn off | • Suggest Reducing of the Number of Air-conditioners to be used |
| | • Reduce Use Time | |
| | • Shift Start Time | • Suggest Changing of Setting Content |
| Air-conditioner in Western-style Room | • Turn off | • Suggest Reducing of the Number of Air-conditioners to be used |
| | • Reduce Use Time | |
| | • Shift Start Time | • Suggest Changing of Setting Content |
| Washing Machine | • Reduce Use Time | • Present Time Slot for Peak Shift |
| | (Cancel Drying Operation) | |
| Television in Living Room | • Turn off | • Suggest Reducing of the Number of Televisions to be used |
| | • Reduce Use Time | |
| | • Shift by Video Reservation | |
| Television in Western-style Room | • Turn off | • Suggest Reducing of the Number of Televisions to be used |
| | • Reduce Use Time | |
| | • Shift by Video Reservation | |
| Dishwasher | • Shift by Reservation | • Present Time Slot for Peak Shift |

Hereinafter, a simple case for the power-saving measure will be described. It is now assumed that an object period in which power saving is demanded to be implemented is a specific time slot on holidays in summer. The predictor 16 predicts the power consumption per day as the feature value, based on the relevant information: holidays in summer, as a condition. The predictor 16 further selects a branch circuit 22 with the most power consumption, from the two or more branch circuits 22, and then predicts the feature value (e.g., the maximum value of the power value) in a time slot corresponding to the object period, regarding the selected branch circuit 22. Note that, the predictor 16 may obtain the maximum values of the power values of all branch circuits 22 in the time slot (object period) in which the power saving is demanded to be implemented.

When it is expected that the power value becomes equal to or more than the target value in the time slot in which the power saving is demanded to be implemented, it can be considered that it is possible to achieve the target value by reducing the power value regarding a branch circuit 22, of which the maximum value of the power value is the largest value in the maximum values of all branch circuits 22.

It is assumed that e.g., "Air-conditioner in Living Room" is a name of a branch circuit 22, of which the maximum value of the power value is predicted to be the largest value in the time slot as the object period by the predictor 16. In this case, it can be said that selection of a power-saving measure of reducing power to be consumed by "Air-conditioner in Living Room" will have the highest degree of contribution to suppression of the power value. For this reason, it is possible to provide the power-saving measure to a user by allowing the presenting device 30 to present a concrete content such as "Can you reduce power consumption of Air-conditioner in Living Room?" to him/her.

It is assumed that e.g., "Living Room (Power Outlet)" is a name of a branch circuit 22, of which the maximum value of the power value is predicted to be the second largest value next to "Air-conditioner in Living Room" by the predictor. In this case, it is possible to provide the second best power-saving measure to the user, by presenting a concrete content such as "Can you turn off any of electric appliances being used in Living Room?" or "Can you reduce power consumption of electric appliance being used in Living Room?" to him/her.

In case two or more kinds of measures are presented as the power-saving measure, the user itself can select a measure easily acceptable, from the two or more kinds of measures, to implement power-saving.

Incidentally, power-saving measures in buildings 20 are strictly different from one another, however, it is actually reasonable to think that, when the characteristics of some buildings 20 are similar to one another, the power-saving measures in those may be also similar to one another. Accordingly, in case meters 23 are respectively installed in buildings 20 of consumers, the receiver 11 may acquire sets of power values measured by the meters 23 from the buildings 20, and the rule extractor 14 may determine the rule based on also the similarity among buildings 20. FIG. 3 shows that the demand prediction system 10 is provided separately from the buildings 20, and configured to collect the sets of power values measured by the meters 23 from the buildings 20. Note that, although only one building 20 is shown in the illustrated example, plural buildings 20 are assumed to actually exist in addition to the building 20.

In the configuration example of FIG. 3, the rule extractor 14 includes an evaluator 141 and a group generator 142 in order to find a rule common to two or more buildings 20, of all buildings 20 (i.e., the illustrated building 20 and the plural buildings 20 not illustrated). The rule extractor 14 utilizes user information and building information, as the relevant information. The user information relates to an attribute of a user in a building 20. The building information relates to an attribute of a building 20. In a case where there is similarity for at least one of the user information or the building information, there may be also similarity for a change in the power value.

In consideration of this, the rule extractor 14 extracts a rule(s) for deriving the feature value from the relevant information, per building 20, as described above, and then the evaluator 141 calculates evaluation values that denote degrees of similarity between rules extracted with respect to all buildings 20. When each rule is denoted by a numerical expression, a degree of similarity can be determined, based on a form and a coefficient of the numerical expression. Alternatively when each rule is denoted by a data table, it can be determined, based on a distance between data included in the data table. In the latter case, the distance may be Euclidean distance or Manhattan distance.

The group generator 142 acquires the evaluation values calculated by the evaluator 141, and combines, as a single rule, two or more rules extracted with respect to different buildings 20, when the two or more rules are similar to an extent such that an evaluation value of the two or more rules is in a prescribed range. When each rule is denoted by a numerical expression, the two or more rules can be combined as a single rule based on an average value, a weighted average value or the like of coefficients in numerical expressions, for example. When each rule is denoted by a data table, the two or more rules can be combined as a single rule based on an average value, a weighted average value or the like of data in data tables, for example.

It can be said that the rule set as above is applicable to buildings 20, which are similar in at least one of the user information or the building information, with relatively high possibility. The obtained rule may be therefore applied to the power information and relevant information, per building 20, stored in the first memory 12 in order to verify whether or not the rule obtained by the group generator 142 is applicable to corresponding buildings 20. The rule that has been verified to be applicable is applied to buildings 20 similar in at least one of the user information or the building information.

When a rule is shared by buildings 20 as described above, it is necessary to collect power values from the buildings 20. That is, the demand prediction system 10 that performs this processing is desirable to be shared by the buildings 20. As a result, the demand prediction system 10 is desirable to be provided as a server that is configured to acquire, by communication, the respective power values measured by the meters 23 installed in the buildings 20. The presenting device 30 just needs to be capable of communicating with the server, and may be therefore a personal computer, a smartphone or a tablet terminal device, etc., as described above.

Alternatively, the demand prediction system 10 shown in FIG. 1 may be installed for each building 20, while a server is provided with a configuration corresponding to the receiver 11, the first memory 12 and the rule extractor 14, and the rules extracted by the server may be given to the respective demand prediction systems 10 installed in buildings 20.

In this embodiment, it has been assumed that each building 20 is a dwelling house, or a dwelling unit of a condominium, and the case of presenting a power-saving measure per branch circuit 22 in a building 20 has been explained as an example. However, in the case of the condominium having a plurality of dwelling units, the power-saving measure may be presented not per branch circuit 22 but to a dwelling unit(s) with large power consumption individually. In this case, the presenting device 30 may be a dwelling terminal also serving as an intercom system installed per dwelling unit.

### (Embodiment 2)

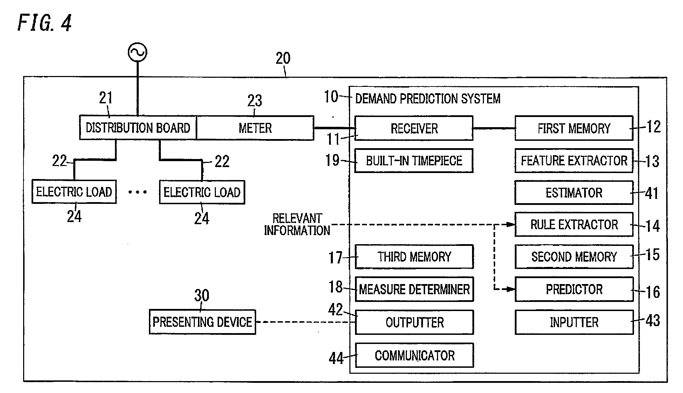

As shown in FIG. 4, a demand prediction system 10 according to this embodiment includes an estimator 41 configured to estimate feature values respectively corresponding to two or more electric loads 24 consumed power, from feature values extracted by a feature extractor 13. In this configuration, when the estimator 41 estimates a feature value corresponding to a certain electric load 24 of the two or more electric loads 24, a rule extractor 14 is preferably further configured to extract a rule for deriving the feature value relating to the certain electric load 24 from relevant information. A predictor 16 is preferably further configured to predict the feature values respectively corresponding to the two or more electric loads 24 in an object period.

Similarly to Embodiment 1, the demand prediction system 10 is desirable to include a third memory 17, a measure determiner 18 and an outputter 42. In this embodiment, the third memory 17 is configured to store names for specifying the two or more electric loads 24 in association with the two or more electric loads 24, respectively. The measure determiner 18 is configured to determine a power-saving measure, and an electric load 24 to be subjected to the power-saving measure to achieve a target value, of the two or more electric loads 24, based on as a condition the feature value in the object period predicted by the predictor 16 and the relevant information. The outputter 42 is configured to refer to the third memory 17 to extract, from the names, a name of the electric load 24 that has been determined to be subjected to the power-saving measure by the measure determiner 18, and allow a presenting device 30 to present the power-saving measure together with the name.

Similarly to Embodiment 1, the feature extractor 13 is preferably configured to calculate dispersion of periods during which power is consumed by each electric load 24 based on power information. When a specific electric load 24 exists, where the dispersion is equal to or more than a reference value, in the two or more electric loads 24, the measure determiner 18 is preferably configured to: allow the presenting device 30 to present, as the best power-saving measure, a peak shift; and allow the presenting device 30 to present, as the second best power-saving measure, a peak cut. The peak shift means a measure for not using the specific electric load 24 during the object period. The peak cut means a measure for reducing power to be consumed during the object period by an electric load 24, where power predicted as the feature value by the predictor 16 is relatively large, of the two or more electric loads 24.

Hereinafter, the configuration of this embodiment will be described in more detail. While a technique of presenting power-saving measures in units of branch circuits 22 has been described in Embodiment 1, a technique of presenting power-saving measures in units of electric loads 24 will be described in this embodiment. The estimator 41 estimates a feature value for each electric load 24 that consumed power, using feature values extracted by the feature extractor 13. According to this configuration, even when two or more electric loads 24 are connected to one branch circuit 22, it is possible to individually extract feature values that respectively correspond to the two or more electric loads 24 connected to the branch circuit 22 to be noted.

The estimator 41 is previously allowed to learn a rule(s) for respectively associating feature values of power values with electric loads 24. The estimator 41 is configured to apply the learnt rule to a feature value to estimate an electric load 24 corresponding thereto. Regarding learning, a feature value extracted from a power value, obtained when each electric load 24 is known to be in used state, is associated with the each electric load 24. In this case, for example, the following feature values are combined to be used: the size of standby power while an electric load 24 is not used; the width of a change in the power value upon activation start of the electric load 24; the maximum value of the power value while the electric load 24 is used; the used period of the electric load 24; and the like. It is possible to derive a rule for specifying the electric load 24 from a condition obtained by combining those feature values.

A receiver 11 acquires, as a power value, electric energy per unit time (e.g., about 30 seconds to 10 minutes), and accordingly, a sampling period for obtaining the power value does not need to be shortened, unlike a case of estimating an electric load 24 based on instantaneous power. A power sensor (current sensor) to be used in a meter 23 can be therefore provided in lower cost, compared with a configuration with a short sampling period, namely, that a sampling processing is performed at a high speed. In other words, according to this embodiment, it is not necessary to detect a basic wave or a harmonic wave by frequency analyzing of an electric power wave, when estimating an electric load 24 from a power value, and it is therefore possible to easily estimate an electric load 24 with a simple configuration.

In case a branch circuit 22 is "Living Room (Power Outlet)" for example, a database (a knowledge base) is previously constructed in the estimator 41, where types of electric loads 24 which may be connected to Power Outlet in Living Room are respectively made in association with feature values of typical power values. With this database, the estimator 41 can estimate a type of electric load 24 from a feature value of a power value. That is, the feature extractor 13 estimates a value of standby power about the branch circuit 22 corresponding to Power Outlet in Living Room, similarly to Embodiment 1. When the power value is more than the value of standby power, the feature extractor 13 extracts, as a feature value, an increase value by which the power value exceeds the value of standby power, and then the estimator 41 collates this feature value with the database, and the type of electric load 24 can be therefore estimated. The types of electric loads 24 which may be connected to Power Outlet in Living Room are assumed to be a television receiver, a vacuum cleaner and a stand-type lighting fixture, etc. Accordingly, when actually used, the used electric load 24 can be estimated to be e.g., a television receiver, based on a difference with the increase value of the power value.

Thus, even when two or more electric loads 24 are connected to one branch circuit 22, it is possible to estimate a type of each electric load 24, and it is accordingly possible to extract, per electric load 24, a rule for deriving a feature value from relevant information as a condition. In other words, the rule extractor 14 of this embodiment extracts the rule per type of electric load 24 estimated by the estimator 41. Note that, when electric loads 24 respectively correspond to branch circuits 22 in one-to-one, rules are extracted in units of branch circuits 22, similarly to Embodiment 1. The technique of extracting the rules is the same as that of Embodiment 1. That is, this embodiment is different from Embodiment 1 in that a feature value is derived by a rule based on relevant information as a condition, not per branch circuit 22 but per electric load 24, however, the other configurations and functions of this embodiment are similar to those of Embodiment 1.

Accordingly, when power saving is demanded, the predictor 16 predicts an electric load 24, which will consume relatively large power in the object period for which the target value is needed to be achieved, and the measure determiner 18 defines a power-saving measure for this electric load 24. Note that, the demand of power saving is to request that the maximum value of the power value over the whole of building 20 is reduced to the target value or less in the object period.

For example it is now assumed that when the predictor 16 predicts power values about all branch circuits 22 in the object period for the demand of power saving and calculates a total value of the power values, the total value is predicted to exceed the target value. That is, it is assumed that a power value to be received by the whole of a building 20 is predicted to exceed the target value in the object period for the demand of power saving. In this case, the measure determiner 18 defines a power-saving measure such that the power value is equal to or less than the target value. For example, it is assumed that although a washing machine is not activated before the object period, the time slot as the object period is predicted to include a period during which the washing machine and an air conditioner in a living room are activated simultaneously.

In this case, the measure determiner 18 extracts power-saving measures such as: a peak cut to promote the user to reduce power consumption of the air-conditioner in the living room; and a peak shift to promote the user to shift an operation time of the washing machine. The measure determiner 18 further determines whether or not the peak shift can be implemented, based on dispersion of at least one kind of operation times, start times or end times when the washing machine has been operated in past in the corresponding building 20 to be mentioned. In short, the measure determiner 18 determines that the peak shift can be implemented, if there is a variance in the time slot of using the washing machine.

When estimated as above, a power-saving measure to an electric load 24 to which the peak shift can be applied is prioritized, as explained also in Embodiment 1. That is, the peak shift is suggested to shift the time slot of using the washing machine to a time slot different from the object period such that the air-conditioner can be used in the object period. Examples of electric loads 24 to which the peak shift can be applied include a dishwasher and the like, in addition to the washing machine. The time slot after shifting by the peak shift is preferably suggested as a time slot in which the unit price of the electricity rate is low, as explained also in Embodiment 1, and accordingly the user can easily accept the suggestion. The measure determiner 18 may suggest the peak shift to promote the user to use the dishwasher in a time slot when the other electric load 24 is predicted to consume small power by the predictor 16.

When the same type of electric loads 24 are arranged in a building 20 and those electric loads 24 are further predicted to be used simultaneously, a power-saving measure for reducing the number of electric loads 24 using simultaneously may be suggested. For example, when two or more air-conditioners are arranged and further predicted to be operated simultaneously in the object period for the demand of power saving, the measure determiner 18 may suggest, before the object period, the power-saving measure to reduce the number of air-conditioners to be operated. Also, when two or more television receivers are arranged in a building 20 and further predicted to be operated simultaneously in the object period, the measure determiner 18 may suggest the power-saving measure to reduce the number of television receivers to be operated.

When an electric load 24 is an air-conditioner, a setting temperature or an air blow rate may be further included in the power-saving measure. For example it is assumed that the first memory 12 stores, as the power information, information that a power value is XX [W] when a setting temperature is set to 26°C and an air blow rate is set to "high" and further the setting temperature and the air blow rate are predicted to be set to 26°C and "high" in the object period for the demand of power saving, respectively. If the power value is known to be reduced by Y [W] when the setting temperature and the air blow rate are set to 28°C and "low", the measure determiner 18 can suggest that it is possible to reduce the power value by Y [W], by setting the setting temperature and the air blow rate to 28°C and "low".

This embodiment is similar to Embodiment 1, except that even in case two or more electric loads 24 are connected to one branch circuit 22, it is possible to distinguish the two or more electric loads 24 and make a power-saving measure per electric load 24. Accordingly, also in this embodiment, when there is similarity for at least one of the user information or the building information, between two or more buildings 20 of buildings 20, it is possible to group and deal with the two or more buildings 20.

Note that, the embodiments described above are examples of the present invention. That is, the present invention is not limited to the embodiments, but numerous modifications and variations can be made in accordance with the design and the like without departing from the technical ideas according to the present invention, even other than the embodiments.

## Claims

1. A demand prediction system, comprising:
a receiver configured to acquire, from a meter, power values respectively consumed through two or more branch circuits branched in a distribution board installed in a building of a power consumer;
a first memory configured to store power information in association with relevant information that relates to the power information, the power information including date and time, and a power value corresponding to each branch circuit acquired by the receiver;
a feature extractor configured to extract a feature value in the power information of each branch circuit stored in the first memory;
a rule extractor configured to set the relevant information stored in the first memory to an explanatory condition for a change in the feature value, and extract a rule for deriving the feature value from the explanatory condition;
a second memory configured to store the rule extracted by the rule extractor; and
a predictor configured to, when a target value is set to the building for power saving in an object period, acquire the relevant information in the object period, and apply the rule stored in the second memory to the relevant information acquired so as to predict the feature value corresponding to each branch circuit in the object period.

2. The demand prediction system according to claim 1, further comprising:
a third memory configured to store names for specifying the two or more branch circuits in association with the two or more branch circuits, respectively;
a measure determiner configured to determine a power-saving measure, and a branch circuit to be subjected to the power-saving measure to achieve the target value, of the two or more branch circuits, based on as a condition the feature value in the object period predicted by the predictor and the relevant information; and
an outputter configured to refer to the third memory to extract, from the names, a name of the branch circuit that has been determined to be subjected to the power-saving measure by the measure determiner, and allow a presenting device to present the power-saving measure together with the name.

3. The demand prediction system according to claim 2, wherein:
the feature extractor is configured to calculate dispersion of periods during which power is consumed through each branch circuit based on the power information; and
when a certain branch circuit exists, where the dispersion is equal to or more than a reference value, in the two or more branch circuits, the measure determiner is configured to:
allow the presenting device to present, as a best power-saving measure, a peak shift for not using an electric load connected to the certain branch circuit during the object period; and
allow the presenting device to present, as a second best power-saving measure, a peak cut for reducing power to be consumed during the object period through a branch circuit, where power predicted as the feature value by the predictor is relatively large, of the two or more branch circuits.

4. The demand prediction system according to claim 1, further comprising an estimator configured to estimate feature values respectively corresponding to two or more electric loads that consumed power, from the feature value of each branch circuit extracted by the feature extractor,
wherein:
when the estimator estimates the feature value corresponding to a certain electric load of the two or more electric loads, the rule extractor is further configured to extract a rule for deriving the feature value relating to the certain electric load from the relevant information; and
the predictor is further configured to predict the feature values respectively corresponding to the two or more electric loads in the object period.

5. The demand prediction system according to claim 4, further comprising:
a third memory configured to store names for specifying the two or more electric loads in association with the two or more electric loads, respectively;
a measure determiner configured to determine a power-saving measure, and an electric load to be subjected to the power-saving measure to achieve the target value, of the two or more electric loads, based on as a condition the feature value in the object period predicted by the predictor and the relevant information; and
an outputter configured to refer to the third memory to extract, from the names, a name of the electric load that has been determined to be subjected to the power-saving measure by the measure determiner, and allow a presenting device to present the power-saving measure together with the name.

6. The demand prediction system according to claim 5, wherein:
the feature extractor is configured to calculate dispersion of periods during which power is consumed by each electric load based on the power information; and
when a specific electric load exists, where the dispersion is equal to or more than a reference value, in the two or more electric loads, the measure determiner is configured to:
allow the presenting device to present, as a best power-saving measure, a peak shift for not using the specific electric load during the object period; and
allow the presenting device to present, as a second best power-saving measure, a peak cut for reducing power to be consumed during the object period by an electric load, where power predicted as the feature value by the predictor is relatively large, of the two or more electric loads.

7. The demand prediction system according to claim 3 or 6, wherein
when allowing the presenting device to present the peak shift as the power-saving measure, the measure determiner is configured to select a time slot during which a targeted electric load of the two or more electric loads is available from time slots during which the targeted electric load has been used in past, based on the power information stored in the first memory, and allow the presenting device to present the time slot.

8. The demand prediction system according to any one of claims 1 to 7, wherein the relevant information includes at least one of:
calendar information that includes seasons and days of week;
weather information that includes weather and outside air temperature;
user information that includes an attribute of a user using power in the building; and
building information that includes an attribute of the building.

9. The demand prediction system according to any one of claims 1 to 8,
wherein
the receiver is configured to acquire plural sets of power values measured by plural meters in plural buildings of consumers, respectively, in addition to a set of the power values measured by the meter in the building,
the rule extractor comprises:
an evaluator configured to calculate an evaluation value that denotes a degree of similarity between rules respectively extracted with respect to all buildings of the building and the plural buildings; and
a group generator configured to combine, as a single rule, two or more rules extracted with respect to two or more buildings of the all buildings, of the rules, when the two or more rules are similar to an extent such that the evaluation value of the two or more rules is in a prescribed range,
the second memory is configured to store the single rule in association with the two or more buildings such that the single rule combined by the group generator is applied to the two or more buildings.

10. An energy conservation assisting system, comprising:
the demand prediction system according to any one of claims 2 to 7; and
the presenting device that presents the power-saving measure received from the demand prediction system.
